# EUROPÄISCHE PATENTSCHRIFT

(11) **EP 3 130 489 B1**
(45) Veröffentlichungstag und Bekanntmachung des Hinweises auf die Patenterteilung: **13.06.2018**
(21) Anmeldenummer: 16178330.3
(22) Anmeldetag: 07.07.2016
(51) Int. Cl.: B60G 3/20, B60G 11/16, B60G 13/00

(54) **RADAUFHÄNGUNG FÜR EIN KRAFTFAHRZEUG**
WHEEL SUSPENSION FOR A MOTOR VEHICLE
SUSPENSION DE ROUE POUR UN VÉHICULE AUTOMOBILE

(30) Priorität: 08.08.2015 DE 102015010271
(43) Veröffentlichungstag der Anmeldung: 15.02.2017
(73) Patentinhaber: AUDI AG, 85045 Ingolstadt (DE)
(72) Erfinder: Langhoff, Hans-Jürgen, 85101 Lenting (DE)

(56) Entgegenhaltungen:
- DE-A1- 4 029 132
- DE-A1-102007 005 967
- DE-A1-102008 049 761
- DE-A1-102015 002 143
- JP-A- H05 116 637
- JP-A- H06 127 233
- JP-A- H07 246 817
- JP-A- 2007 230 517
- US-A- 5 411 285

## Beschreibung

Die vorliegende Erfindung betrifft eine Radaufhängung für ein Kraftfahrzeug nach dem Oberbegriff des Patentanspruches 1. Eine solche Radaufhängung ist aus der JP 2007 230517 A bekannt. Eine gängige Radaufhängung für ein Kraftfahrzeug weist eine Schraubendruckfeder als Tragfeder und einen Teleskop-Stoßdämpfer auf, die an Radführungselementen und am Fahrzeugaufbau abgestützt sind und ein vertikal ausgerichtetes Federbein bilden, bei dem der Stoßdämpfer innerhalb der Tragfeder angeordnet ist.
Alternativ dazu kann die Tragfeder auch axial versetzt zum Stoßdämpfer angeordnet sein. Bei der konstruktiven Auslegung einer solchen Radaufhängung mit außerhalb der Tragfeder angeordneten Stoßdämpfern ist unter Berücksichtigung der räumlichen Gegebenheiten und des erforderlichen Freigangs der Radführungselemente und des gegebenenfalls gelenkten Rades auch darauf zu achten, günstige Übersetzungsverhältnisse zwischen den vertikalen Radbewegungen und der Tragfeder bzw. dem Stoßdämpfer zu schaffen, wobei eine an sich günstige, weit außen in Radnähe liegende Anordnung der Tragfeder aufgrund deren relativ zum Stoßdämpfer größeren Außenumfang kaum möglich ist.
Aus der DE 40 29 132 A1 ist eine gattungsgemäße Radaufhängung bekannt, bei der die als Federbein ausgeführte Tragfeder mit Stoßdämpfer unter Zwischenschaltung eines mit seinen Lagerstellen ein Dreieck bildenden Winkelhebels in eine über den Radführungselementen liegende, im Wesentlichen horizontale Position verlagert ist. Der Winkelhebel ist dabei an einem oberen Querlenker der Radaufhängung schwenkbar gelagert und wirkt mit einem nach oben abragenden Arm auf das Federbein, während ein zweiter Arm über eine Koppelstange mit dem Fahrzeugaufbau verbunden ist.

Die Lenker einer solchen Radaufhängung sind in gängiger Praxis als kompakte Gussteile gefertigt. Diese stellen jedoch speziell bei Radaufhängungen mit komplexen Lenker-Anordnungen nur wenig Freiheitsgrade im Hinblick auf Lenker-Geometrien bereit.

Die Aufgabe der Erfindung besteht darin, eine Radaufhängung bereitzustellen, mittels der im Vergleich zum Stand der Technik die Radaufhängung mit weniger baulichen sowie konstruktiven Zwängen gestaltet werden kann.

Die Aufgabe ist durch die Merkmale des Patentanspruches 1 gelöst. Bevorzugte Weiterbildungen der Erfindung sind in den Unteransprüchen offenbart.

Gemäß dem kennzeichnenden Teil des Patentanspruches 1 wird der Querlenker der Radaufhängung nicht mehr als ein kompaktes Gussteil hergestellt, sondern ist dieser vielmehr zweiteilig aus zwei voneinander separaten Querlenker-Streben aufgebaut. Der Winkelhebel ist mit seiner Schwenkachse bauraumgünstig zwischen den beiden Querlenker-Streben angelenkt. Die beiden Querlenker-Streben sind baulich miteinander nicht mehr verbunden. Bevorzugt können die beiden Querlenker-Streben Blechumformteile aus Stahl oder stranggepresste Hohlprofile aus Aluminium sein. Die Querlenker-Streben können - im Vergleich zu einer kompakten Querlenker-Ausführung - in einfacher Geometrie ausgeführt sein. Vor diesem Hintergrund können alternativ auch faserverstärkte Kunststoffe zum Einsatz kommen, aufgrund der vereinfachten Streben-Geometrie. Aufgrund der mehrteiligen Ausführung des Querlenkers können unterschiedliche Materialien kombiniert werden und führt die vereinfachte Streben-Geometrie im Vergleich zu einer herkömmlichen Lenker-Anordnung zu einer Reduzierung des Bauteilgewichts.

In der oben angedeuteten Lenker-Anordnung kann der Stoßdämpfer in der Fahrzeugquerrichtung fahrzeugaußen in unmittelbarer Nähe am Radträger direkt am Querlenker abgestützt sein. Die Tragfeder kann in Parallelschaltung dazu um einen Querversatz nach fahrzeuginnen beabstandet unter Zwischenschaltung des Winkelhebels direkt am unteren Querlenker abgestützt sein.

Zudem kann der Winkelhebel, die Koppelstange, der Fahrzeugaufbau und der untere Querlenker mitsamt der zwischengeordneten Schwenklagerstellen ein Parallelogramm bilden. In diesem Fall sind die Schwenklagerstelle des Winkelhebels am Querlenker und die Lagerstelle der Koppelstange am Winkelhebel in der Fahrzeughochrichtung in etwa in Flucht angeordnet. Außerdem sind die aufbauseitige Lagerstelle der Koppelstange und die aufbauseitige Lagerstelle des unteren Querlenkers ebenfalls in der Fahrzeughochrichtung in etwa in Flucht angeordnet.

In einer technischen Umsetzung kann die Lagerstelle des Winkelhebels am Querlenker und die Lagerstelle des Stoßdämpfers am Querlenker lageidentisch sein. In diesem Fall sind der Winkelhebel und der Stoßdämpfer an einer gemeinsamen Schwenkachse am Querlenker angelenkt. Die gemeinsame Schwenkachse des Winkelhebels und des Stoßdämpfers kann durch einen Lagerbolzen definiert sein, der sich zwischen den beiden Querlenker-Streben erstreckt.

Die querlenkerseitige Schwenklagerstelle kann im Winkelhebel als eine Lagernabe realisiert sein, durch die der Lagerbolzen geführt ist. Die querlenkerseitige Schwenklagerstelle des Stoßdämpfers kann mittels einer Dämpferstelze realisiert sein, die sich gabelartig aufteilende Stelzenteile aufweist. Die beiden Stelzenteile der Dämpferstelze können mit einem Freigang den zweiten Hebelarm des Winkelhebels umgreifen. Zudem können die Stelzenteile unter axialer Zwischenlage der Winkelhebel-Lagernabe am Lagerbolzen angelenkt sein.

In einer Ausführungsvariante kann die Tragfeder mit ihrem unteren Fußpunkt auf einem Federteller des Winkelhebels abgestützt sein. Der Tragfeder-Fußpunkt ist dabei um eine vordefinierte Hebelarmlänge von der Winkelhebel-Schwenkachse beabstandet. Der Federteller der Tragfeder kann ortsfest oder schwenkbar am ersten Hebelarm des Winkelhebels angebunden sein. Bei einer schwenkbaren Anbindung kann der erste Hebelarm des Winkelhebels zwei äußere Konsolenflügel aufweisen, zwischen denen der Federteller schwenkbar gelagert ist.

Wie oben erwähnt, ist die Koppelstange zwischen dem zweiten Hebelarm des Winkelhebels und dem Fahrzeugaufbau angelenkt. Die Koppelstange kann analog zum Querlenker ebenfalls zweiteilig aus zwei voneinander separaten Koppelstangen-Streben aufgebaut sein. In diesem Fall kann der zweite Hebelarm des Winkelhebels zwischen den beiden Koppelstangen-Streben schwenkgelagert sein. Zur Realisierung einer solchen Schwenklagerung kann der zweite Hebelarm des Winkelhebels eine Lagerausnehmung aufweisen, durch die ein Lagerbolzen geführt ist. Auf den beidseitig aus der Lagerausnehmung ragenden Endstücken des Lagerbolzens können die Koppelstangen-Streben befestigt sein. Zwischen dem Lagerbolzen und der radial äußeren Lagerausnehmung des zweiten Hebelarms kann gegebenenfalls ein Elastomerlager, insbesondere ein Gummi-Metall-Lager angeordnet sein.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und Weiterbildungen sowie deren Vorteile werden nachfolgend anhand von Zeichnungen näher erläutert.

Es zeigen:
- Fig. 1: in einer Seitenansicht eine Radaufhängung für ein Kraftfahrzeug, bei der die als Schraubendruckfeder ausgeführte Tragfeder und der Teleskop-Stoßdämpfer räumlich voneinander getrennt angeordnet sind, wobei der Stoßdämpfer direkt und die Tragfeder unter Zwischenschaltung eines Winkelhebels an einem unteren Querlenker angelenkt sind;
- Fig. 2: eine Teilseitenschnittansicht entlang der Schnittebene I-I aus der Fig. 1;
- Fig. 3: in einer Explosionsdarstellung eine Dämpferstelze, eine Koppelstange sowie den Winkelhebel und den Querlenker der Radaufhängung;
- Fig. 4 und 5: jeweils unterschiedliche Teilansichten der in der Fig. 1 gezeigten Radaufhängung.

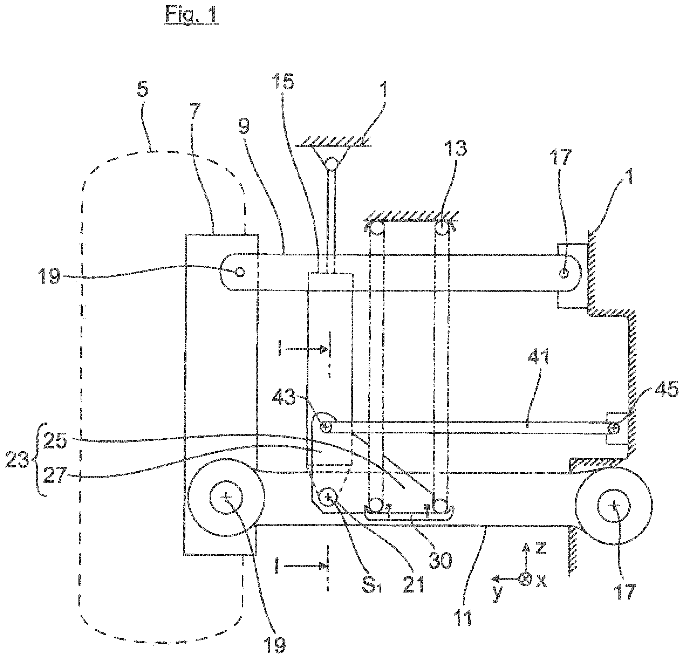

In der Fig. 1 ist eine an einem Fahrzeugaufbau 1 angeordnete Radaufhängung 3 gezeigt. Die Radaufhängung 3 setzt sich im Wesentlichen aus einem, ein Fahrzeugrad 5 tragenden Radträger 7, einem oberen Querlenker 9, einem unteren Querlenker 11 sowie aus einer als Tragfeder 13 wirkenden Schraubendruckfeder und einem Teleskop-Stoßdämpfer 15 zusammen. Die Querlenker 9, 11 sind über einheitlich mit der Bezugsziffer 17 bezeichnete Schwenklager 17 (Gummimetallbuchsen) am Fahrzeugaufbau 1 und exemplarisch über zum Beispiel Kugelgelenke oder Gummimetallbuchsen 19 am Radträger 7 schwenkbar angelenkt. Bei gelenkten Rädern ist zudem eine Lenkeinrichtung mit Lenkarm am Radträger 7 sowie Spurstangen und ein Lenkgetriebe vorgesehen.

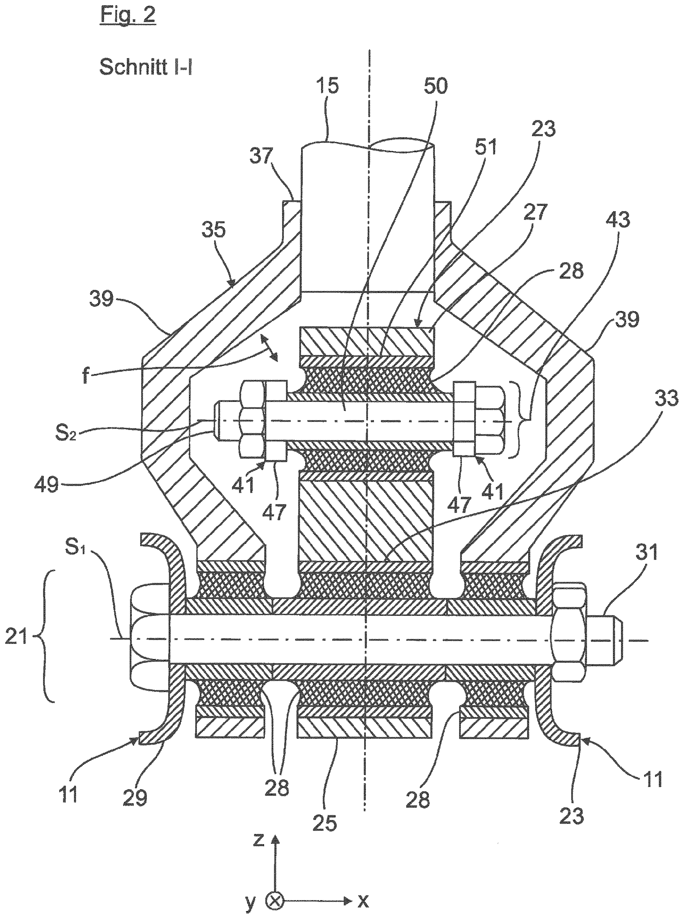

In der Fig. 1 ist der Stoßdämpfer 15 in der Fahrzeugquerrichtung y außerhalb der Tragfeder 15 über ein Schwenklager 21 am Querlenker 11 angelenkt, das in der Fig. 2 als ein Gummi-Metall-Hülsenlager 28 realisiert ist. Die weiter fahrzeuginnen positionierte Tragfeder 13 ist an ihrem unteren Fußpunkt über einen Winkelhebel 23 am Querlenker 11 abgestützt. Der Winkelhebel 23 weist einen im Wesentlichen horizontal ausgerichteten ersten Hebelarm 25 und einen im Wesentlichen vertikal ausgerichteten zweiten Hebelarm 27 auf.

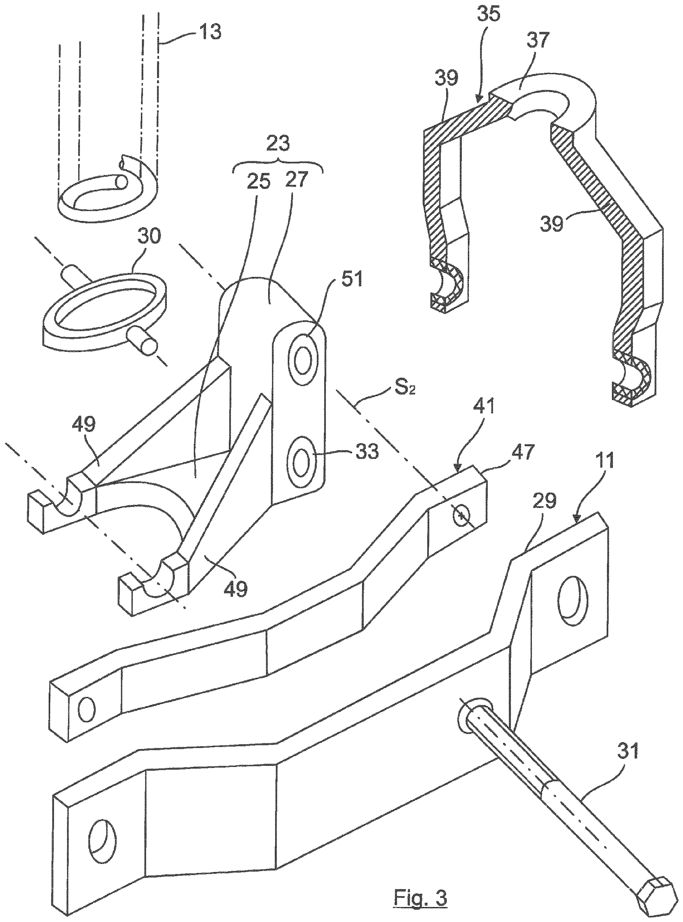

Wie in der Fig. 2 oder 3 angedeutet, ist der untere Querlenker 11 zweiteilig aus zwei voneinander separaten Querlenker-Streben 29 aufgebaut. Die beiden Querlenker-Streben 29 sind in der Fahrzeuglängsrichtung x voneinander beabstandet, wobei dazwischen der Winkelhebel 23 schwenkbar angelenkt ist. In der Fig. 2 ist der Winkelhebel 23 unmittelbar an der Schenklagerstelle 21 des Stoßdämpfers 15 angelenkt. Das heißt, dass sowohl der Winkelhebel 23 als auch der Stoßdämpfer 15 um eine gemeinsame Schwenkachse S₁ schwenkbar sind. Die gemeinsame Schwenkachse S₁ des Winkelhebels 23 und des Stoßdämpfers 15 ist in der Fig. 2 durch einen Lagerbolzen 31 gebildet, der sich zwischen den beiden Querlenker-Streben 29 erstreckt.

Der Lagerbolzen 31 ist durch eine Lager-Innennabe 33 im Stoßbereich der beiden Hebelarme 25, 27 des Winkelhebels 23 geführt, und zwar unter Zwischenlage eines Gummi-Metall-Hülsenlagers 28.

In den Figuren weist der Stoßdämpfer 15 an seinem unteren Fußpunkt eine Dämpferstelze 35 auf. Die Dämpferstelze 35 ist oben mit einem Montagering 37 ausgebildet, an dem der Zylinder des Stoßdämpfers 15 montiert ist. Der Montagering 37 ist im weiteren Verlauf nach unten durch sich gabelartig aufteilende Stelzenteile 39 verlängert. Diese umgreifen in der Fig. 2 mit einem Freigang f den vertikal nach oben ragenden zweiten Hebelarm 27 des Winkelhebels 23. Die beiden Stelzenteile 39 sind unter Zwischenlage weiterer Gummi-Metall-Hülsenlager 28 am Lagerbolzen 31 angelenkt, und zwar beidseitig axial benachbart zur Lagernabe 33 des Winkelhebels 23, wodurch der Winkelhebel 23 und der Stoßdämpfer 15 um die gemeinsame Schwenkachse S₁ schwenkbar sind.

Wie aus den Figuren hervorgeht, ist der zweite Hebelarm 27 des Winkelhebels 23 mittels einer Koppelstange 41 am Fahrzeugaufbau 1 abgestützt. Die Koppelstange 41 ist dabei mit ihren gegenüberliegenden Enden jeweils an Schenklagerstellen 43, 45 angelenkt.

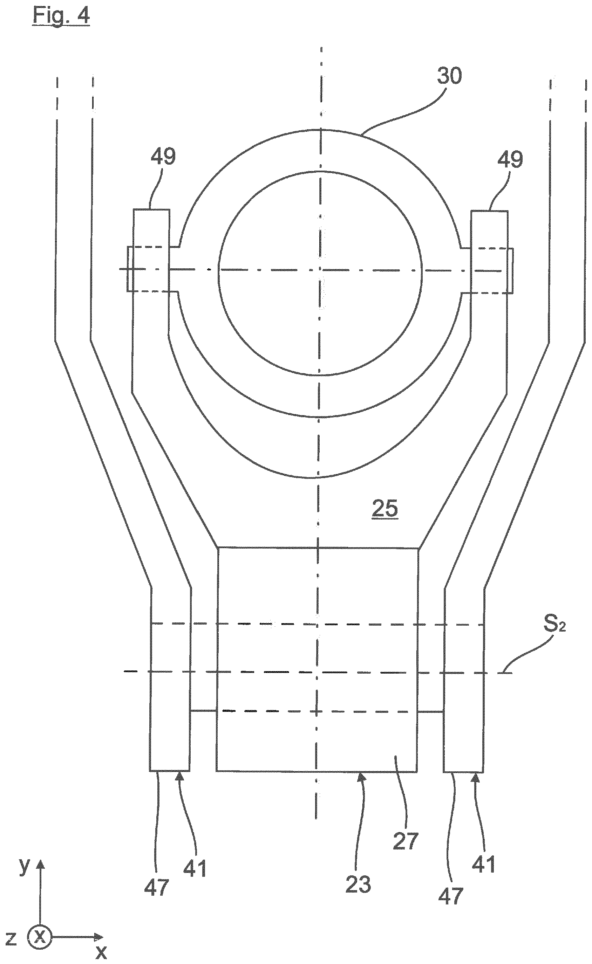

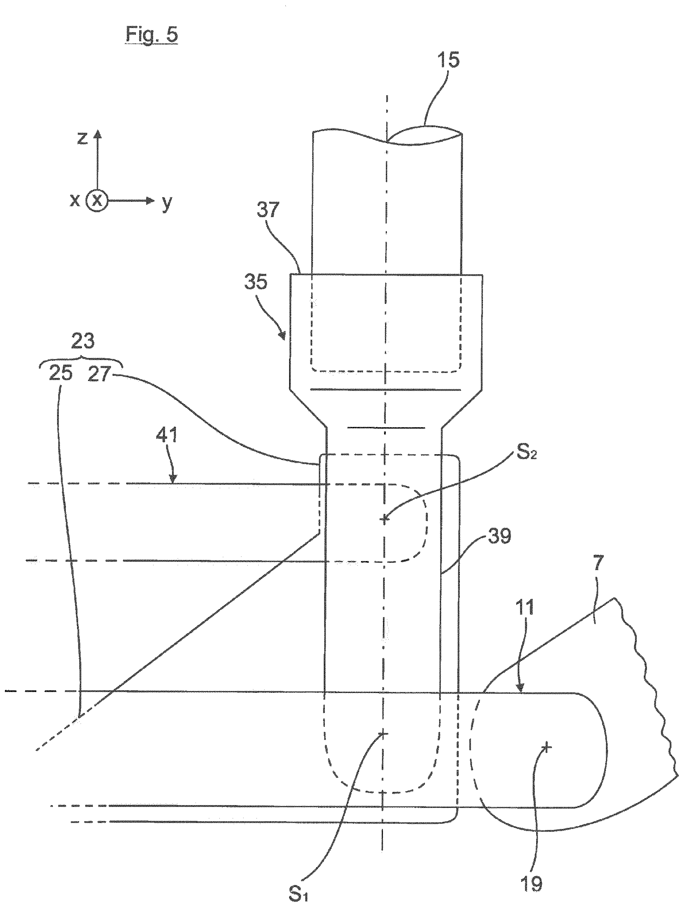

Die Koppelstange 41 ist in den Fig. 2 oder 4 nicht einstückig ausgeführt, sondern vielmehr aus zwei voneinander separaten Koppelstangen-Streben 47 aufgebaut. Der zweite Hebelarm 27 ist in der Fig. 2 oder 4 zwischen den beiden Koppelstangen-Streben 47 unter Bildung der Schwenklagerstelle 43 angelenkt. An der Schwenklagerstelle 43 sind die Koppelstangen-Streben 47 um eine Schenkachse S₂ (Fig. 2, 3, 4 oder 5) schenkbar. In der Fig. 2 weist die Schwenklagerstelle 43 einen Lagerbolzen 50 auf, der sich zwischen den beiden Koppelstangen-Streben 47 erstreckt und durch eine Lagerausnehmung 51 des zweiten Hebelarms 27 geführt ist. Zwischen der Lagerausnehmung 51 des zweiten Hebelarms 27 und dem Lagerbolzen 50 ist ein weiteres Gummi-Metall-Hülsenlager 28 zwischengeschaltet.

Wie aus der Fig. 1 weiter hervorgeht, ist die Tragfeder 13 über einen Federteller 30 auf dem horizontalen ersten Hebelarm 25 abgestützt. Der Federteller 30 ist nicht ortsfest, sondern vielmehr schwenkbar am ersten Hebelarm 25 des Winkelhebels 23 gelagert. Hierzu weist der erste Hebelarm 25 des Winkelhebels 23 gemäß der Fig. 2 zwei voneinander beabstandete Konsolenflügel 49 (Fig. 3) auf, zwischen denen der Federteller 30 um eine Schwenkachse S₃ (Fig. 3) angelenkt ist.

Der in den Figuren gezeigte Federteller 30 ist nur notwendig, wenn die Übersetzung (bedingt durch die Länge der Koppelstange 41) nicht bei 1 liegt. Im Falle, dass die Übersetzung bei 1 liegt, bewegt sich der horizontale Hebelarm 25 immer in waagrechter Position zum Fahrzeugaufbau 1 und wird die Tragfeder 13 nicht seitlich ausgelenkt.

### Bezugszeichenliste

1 Fahrzeugaufbau
3 Radaufhängung
5 Fahrzeugrad
7 Radträger
9 oberer Querlenker
11 unterer Querlenker
13 Tragfeder
15 Teleskopdämpfer/Stoßdämpfer
17 Schwenklager
19 Kugelgelenke
21 Schwenklager ( am unteren Querlenker 11)
23 Winkelhebel
25 horizontaler Hebelarm
27 vertikaler Hebelarm
28 Gummimetallhülsenlager ( Schwenklager am unteren Querlenker 11)
29 Querlenkerstreben
30 Federteller
31 Lagerbolzen
33 Lagernabe
35 Dämpferstelze
37 Montagering Dämpferstelze
39 Stelzenteile
41 Koppelstange
43, 45 Lagerstellen Koppelstange
47 Koppelstangen-Streben
49 Konsolenflügel
50 Lagerbolzen
51 Lagerstelle vertikaler Hebelarm 27 (zur Anbindung der Koppelstange)
S1 Schwenkachse Winkelhebel/Stoßdämpfer
S2 Schwenkachse Koppelstange
S3 Schwenkachse Federteller

## Patentansprüche

1. Radaufhängung für ein zweispuriges Kraftfahrzeug, mit einem unteren Querlenker (11), der sich in der Fahrzeugquerrichtung (y) zwischen einem Fahrzeugaufbau (1) und einem Radträger (7) erstreckt, wobei auf dem Querlenker (11) ein Stoßdämpfer (15) und eine Tragfeder (13) abgestützt sind, wobei die Radaufhängung (3) einen Winkelhebel (23) aufweist, der an einer Lagerstelle (21) um eine in der Fahrzeuglängsrichtung (x) ausgerichtete Schwenkachse (S₁) am Querlenker (11) schwenkgelagert ist, und der Winkelhebel (23) einen ersten Hebelarm (25) aufweist, auf dem die Tragfeder (13) abgestützt ist, und einen zweiten Hebelarm (27) aufweist, auf dem eine am Fahrzeugaufbau (1) angelenkte Koppelstange (41) abgestützt ist, **dadurch gekennzeichnet, dass** der Querlenker (11) zweiteilig aus zwei voneinander separaten Querlenker-Streben (29) aufgebaut ist, und dass der Winkelhebel (23) mit seiner Schwenkachse (S₁) zwischen den beiden Querlenker-Streben (29) angelenkt ist.

2. Radaufhängung nach Anspruch 1, **dadurch gekennzeichnet, dass** die Schwenklagerstelle (21) des Winkelhebels (23) und die Schwenklagerstelle (21) des Stoßdämpfers (15) am Querlenker (9) lageidentisch sind, und dass die gemeinsame Schwenkachse (S₁) des Winkelhebels (23) und des Stoßdämpfers (15) durch einen Lagerbolzen (31) gebildet ist, der sich zwischen den Querlenker-Streben (29) erstreckt.

3. Radaufhängung nach Anspruch 2, **dadurch gekennzeichnet, dass** zur Bildung der querlenkerseitigen Schenklagerstelle (21) der Winkelhebel (23) eine Lagernabe (33) aufweist, durch die der Lagerbolzen (31) geführt ist, und dass insbesondere zwischen der Lagernabe (33) des Winkelhebels (23) und dem Lagerbolzen (31) ein Gummi-Metall-Hülsenlager (28) angeordnet ist.

4. Radaufhängung nach Anspruch 2 oder 3, **dadurch gekennzeichnet, dass** der Stoßdämpfer (15) an seiner querlenkerseitigen Schwenklagerstelle (21) eine Dämpferstelze (35) mit sich gabelartig aufteilenden Stelzenteilen (39) aufweist, und dass die Stelzenteile (39) mit einem Freigang (f) den zweiten Hebelarm (27) des Winkelhebels (23) umgreifen.

5. Radaufhängung nach Anspruch 4, **dadurch gekennzeichnet, dass** die Stelzenteile (39) der Dämpferstelze (35) unter axialer Zwischenlage der Winkelhebel-Lagernabe (33) am Lagerbolzen (33) angelenkt sind, und dass insbesondere die Stelzenteile (39) der Dämpferstelze (35) über Gummi-Metall-Hülsenlager (28) am Lagerbolzen (33) angelenkt sind.

6. Radaufhängung nach einem der vorhergehenden Ansprüche, **dadurch gekennzeichnet, dass** der auf dem ersten Hebelarm (25) des Winkelhebels (23) abgestützte Tragfeder-Fußpunkt um eine Hebelarmlänge von der Winkelhebel-Schwenkachse (S₁) beabstandet ist, und/oder dass der erste Hebelarm (25) des Winkelhebels (23) einen Federteller (30) aufweist, auf dem die Tragfeder (13) abgestützt ist.

7. Radaufhängung nach Anspruch 6, **dadurch gekennzeichnet, dass** der Federteller (30) ortsfest oder schwenkbar am ersten Hebelarm (25) des Winkelhebels (23) angelenkt ist, und dass insbesondere zur Bildung einer Schwenklagerstelle der erste Hebelarm (25) zwei Konsolenflügel (49) aufweist, zwischen denen der Federteller (30) schwenkgelagert ist.

8. Radaufhängung nach einem der vorhergehenden Ansprüche, **dadurch gekennzeichnet, dass** die Koppelstange (41) zweiteilig aus zwei voneinander separaten Koppelstangen-Streben (47) aufgebaut ist, und dass der zweite Hebelarm (27) des Winkelhebels (25) zwischen den beiden Koppelstangen-Streben (47) schwenkgelagert ist.

9. Radaufhängung nach Anspruch 8, **dadurch gekennzeichnet, dass** die Schwenklagerstelle (43) zwischen der Koppelstange (41) und dem zweiten Hebelarm (27) des Winkelhebels (23) einen Lagerbolzen (50) aufweist, der sich zwischen den Koppelstangen-Streben (47) erstreckt und der durch eine Lagerausnehmung (51) des zweiten Hebelarms (27) geführt ist, und dass insbesondere zwischen der Lagerausnehmung (51) des Winkelhebels (23) und dem Lagerbolzen (50) ein Gummi-Metall-Hülsenlager (28) angeordnet ist.

## Claims

1. Wheel suspension for a two-track motor vehicle, comprising a lower transverse link (11), which extends in the vehicle transverse direction (y) between a vehicle structure (1) and a wheel carrier (7), wherein a shock absorber (15) and a suspension spring (13) are supported on the transverse link (11), wherein the wheel suspension (3) comprises an angle lever (23), which is pivot mounted on the bearing point (21) about a pivot axis (S₁) aligned in the vehicle longitudinal direction (x) on the transverse link (11), and the angle lever (23) comprises a first lever arm (25) on which the suspension spring (13) is supported and comprises a second lever arm (27) on which a coupling rod (41) attached to the vehicle structure (1) is supported, **characterised in that** the transverse link (11) is constructed in two parts from two separate transverse link struts (29), and **in that** the angle lever (23) is attached with its pivot axis (S₁) between the two transverse link struts (29).

2. Wheel suspension according to claim 1, **characterised in that** the pivot bearing point (21) of the angle lever (23) and the pivot bearing point (21) of the shock absorber (15) are in an identical position on the transverse link (9), and **in that** the common pivot axis (S₁) of the angle lever (23) and the shock absorber (15) is formed by a bearing bolt (31) which extends between the transverse link struts (29).

3. Wheel suspension according to claim 2, **characterised in that** to form the transverse link-side pivot bearing point (21) the angle lever (23) comprises a bearing hub (33) through which the bearing bolt (31) is guided and **in that** in particular a rubber-metal sleeve bearing (28) is arranged between the bearing hub (33) of the angle lever (23) and the bearing bolt (31).

4. Wheel suspension according to claim 2 or 3, **characterised in that** the shock absorber (15) on its transverse link-side pivot bearing point (21) comprises a damper strut (35) with fork-like dividing strut parts (39), and **in that** the strut parts (39) with a clearance (f) grip around the second lever arm (27) of the angle lever (23).

5. Wheel suspension according to claim 4, **characterised in that** the strut parts (39) of the damper strut (35) are attached onto the bearing bolt (33) with the axial interposition of the angle lever bearing hub (33) and **in that** in particular the strut parts (39) of the damper strut (35) are attached onto the bearing bolt (33) by rubber-metal sleeve bearings (28).

6. Wheel suspension according to any of the preceding claims, **characterised in that** the suspension spring base point supported on the first lever arm (25) of the angle lever (23) is spaced apart by a lever arm length from the angle lever pivot axis (S₁), and/or in that the first lever arm (25) of the angle lever (23) comprises a spring plate (30) on which the suspension spring (13) is supported.

7. Wheel suspension according to claim 6, **characterised in that** the spring plate (30) is attached in a fixed or pivotable manner onto the first lever arm (25) of the angle lever (23), and **in that** in particular to form a pivot bearing point the first lever arm (25) comprises two panel flanks (49) between which the spring plate (30) is pivot mounted.

8. Wheel suspension according to any of the preceding claims, **characterised in that** the coupling rod (41) is constructed in two parts from two separate coupling rod struts (47), and **in that** the second lever arm (27) of the angle lever (25) is pivot mounted between the two coupling rod struts (47).

9. Wheel suspension according to claim 8, **characterised in that** the pivot bearing point (43) between the coupling rod (41) and the second lever arm (27) of the angle lever (23) comprises a bearing bolt (50), which extends between the coupling rod struts (47) and which is guided through a bearing recess (51) of the second lever arm (27), and **in that** in particular a rubber-metal-sleeve bearing (28) is arranged between the bearing recess (51) of the angle lever (23) and the bearing bolt (50).

## Revendications

1. Suspension de roue pour un véhicule automobile à essieux, avec un bras transversal inférieur (11), qui s'étend dans la direction transversale de véhicule (y) entre une carrosserie de véhicule (1) et un support de roue (7),
dans laquelle un amortisseur (15) et un ressort de support (13) sont appuyés sur le bras transversal (11),
dans laquelle la suspension de roue (3) comporte un levier coudé (23) qui est monté sur le bras transversal (11) de manière à pouvoir pivoter au niveau d'un point d'appui (21) autour d'un axe de pivotement (S₁) orienté dans la direction longitudinale de véhicule (x) et le levier coudé (23) comporte un premier bras de levier (25) sur lequel s'appuie le ressort de support (13) et un deuxième bras de levier (27) sur lequel s'appuie une biellette de renvoi (41) articulée au niveau de la carrosserie de véhicule (1),
**caractérisé en ce que** le bras transversal (11) est construit en deux parties à partir de deux barres de bras transversal (29) séparées l'une de l'autre et **en ce que** le levier coudé (23) est articulé avec son axe de pivotement (S₁) entre les deux barres de bras transversal (29).

2. Suspension de roue selon la revendication 1, **caractérisée en ce que** le point d'appui de pivotement (21) du levier coudé (23) et le point d'appui de pivotement (21) de l'amortisseur (15) sont dans une position identique au niveau du bras transversal (9) et **en ce que** l'axe de pivotement commun (S₁) du levier coudé (23) et de l'amortisseur (15) est formé par un axe de palier (31) qui s'étend entre les barres de bras transversal (29).

3. Suspension de roue selon la revendication 2, **caractérisée en ce que,** pour former le point d'appui de pivotement (21) côté bras transversal, le levier coudé (23) comporte un moyeu de palier (33) à travers lequel passe l'axe de palier (31) et **en ce que**, en particulier, un palier manchon en caoutchouc et métal (28) est agencé entre le moyeu de palier (33) du levier coudé (23) et l'axe de palier (31).

4. Suspension de roue selon la revendication 2 ou 3, **caractérisée en ce que** l'amortisseur (15) comporte au niveau de son point d'appui de pivotement (21) côté bras transversal une biellette d'amortisseur (35) avec des parties de biellette (39) se divisant en fourche et **en ce que** les parties de biellette (39) entourent avec un espace (f) le deuxième bras de levier (27) du levier coudé (23).

5. Suspension de roue selon la revendication 4, **caractérisée en ce que** les parties de biellette (39) de la bielle d'amortisseur (35) sont articulées au niveau de l'axe de palier (33) en intercalant de façon axiale le moyeu de palier de levier coudé (33) et **en ce que**, en particulier, les parties de biellette (39) de la biellette d'amortisseur (35) sont articulées au niveau de l'axe de palier (33) par l'intermédiaire de paliers manchons en caoutchouc et métal (28).

6. Suspension de roue selon l'une quelconque des revendications précédentes, **caractérisée en ce que** la base de ressort de support s'appuyant sur le premier bras de levier (25) du levier coudé (23) est distante, d'une longueur de bras de levier, de l'axe de pivotement de levier coudé (S₁) et/ou **en ce que** le premier bras de levier (25) du levier coudé (23) comporte une coupelle de ressort (30) sur laquelle s'appuie le ressort de support (13).

7. Suspension de roue selon la revendication 6, **caractérisée en ce que** la coupelle de ressort (30) est articulée, stationnaire ou pivotant, au niveau du premier bras de levier (25) du levier coudé (23) et **en ce que**, en particulier, pour former un point d'appui de pivotement, le premier bras de levier (25) comporte deux ailes de console (49) entre lesquelles la coupelle de ressort (30) est logée de manière à pouvoir pivoter.

8. Suspension de roue selon l'une quelconque des revendications précédentes, **caractérisée en ce que** la biellette de renvoi (41) est construite en deux parties à partir de deux barres de biellette de renvoi (47) séparées l'une de l'autre et **en ce que** le deuxième bras de levier (27) du levier coudé (25) est logé entre les deux barres de biellette de renvoi (47) de manière à pouvoir pivoter.

9. Suspension de roue selon la revendication 8, **caractérisée en ce que** le point d'appui de pivotement (43) entre la biellette de renvoi (41) et le deuxième bras de levier (27) du levier coudé (23) comporte un axe de palier (50) qui s'étend entre les barres de biellette de renvoi (47) et qui passe à travers un évidement de palier (51) du deuxième bras de levier (27) et **en ce que**, en particulier, un palier manchon en caoutchouc et métal (28) est agencé entre l'évidement de palier (51) du levier coudé (23) et l'axe de palier (50).
